(19) Europäisches Patentamt
European Patent Office
Office européen des brevets

(11) **EP 4 600 121 A1**

(12) **EUROPÄISCHE PATENTANMELDUNG**

(43) Veröffentlichungstag:
**13.08.2025   Patentblatt 2025/33**

(21) Anmeldenummer: **24157183.5**

(22) Anmeldetag: **12.02.2024**

(51) Internationale Patentklassifikation (IPC):
**B62D 35/00** (2006.01)

(52) Gemeinsame Patentklassifikation (CPC):
**B62D 35/001**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Jensen, Maxim Daugård**
**22395 Hamburg (DE)**

(72) Erfinder: **Jensen, Maxim Daugård**
**22395 Hamburg (DE)**

(74) Vertreter: **Eisenführ Speiser**
**Patentanwälte Rechtsanwälte PartGmbB**
**Johannes-Brahms-Platz 1**
**20355 Hamburg (DE)**

(54) **HECKLUFTLENKEINRICHTUNG FÜR EINEN FRACHTBEHÄLTER EINES KRAFTFAHRZEUGES, FRACHTBEHÄLTER FÜR EIN KRAFTFAHRZEUG, KRAFTFAHRZEUG, VERWENDUNG EINER HECKLUFTLENKEINRICHTUNG UND VERWENDUNG EINES FRACHTBEHÄLTERS**

(57)    Heckluftlenkeinrichtung (100) für einen Frachtbehälter (210) eines Kraftfahrzeuges (200) zum Ablenken von in einem Vorwärtsbetriebszustand des Kraftfahrzeugs (200) anströmender Luft (310) in eine Windschattenzone (220) des Frachtbehälters (210), die Heckluftlenkeinrichtung (100) umfassend: einen Luftkanal (110), der sich in einer Längsrichtung zwischen einer Lufteinlassöffnung (120) und einer Luftauslassöffnung (130) mit einer Luftkanallänge (111) erstreckt, der sich in einer Querrichtung orthogonal zur Längsrichtung mit einer Luftkanalbreite (112) erstreckt, und der sich orthogonal zur Längsrichtung und orthogonal zur Querrichtung mit einer Luftkanalhöhe (113) erstreckt, wobei der Luftkanal (110) ausgebildet ist, im Vorwärtsbetriebszustand des Kraftfahrzeugs (200) die anströmende Luft (310) durch den Luftkanal (110) von der Lufteinlassöffnung (120) zu der Luftauslassöffnung (130) in Richtung der Windschattenzone (220) des Frachtbehälters (210) zu lenken, wobei die Lufteinlassöffnung (120) eine erste Querschnittsfläche (121) aufweist und die Luftauslassöffnung (130) eine zweite Querschnittsfläche (131) aufweist, wobei die zweite Querschnittsfläche (131) kleiner ist als die erste Querschnittsfläche (121), dadurch gekennzeichnet, dass eine Flächennormale (132) der zweiten Querschnittsfläche (131) gegenüber einer Flächennormale (122) der ersten Querschnittsfläche (121) um einen Neigungswinkel (140) geneigt ist, so dass die im Vorwärtsbetriebszustand des Kraftfahrzeugs (200) durch den Luftkanal (110) strömende Luft (320) an der zweiten Querschnittsfläche (131) an der Luftauslassöffnung (130) des Luftkanals (110) in Richtung der Windschattenzone (220) des Frachtbehälters (210) abgelenkt wird.

Fig. 1

EP 4 600 121 A1

**Beschreibung**

Die vorliegende Erfindung betrifft eine Heckluftlenkeinrichtung für einen Frachtbehälter eines Kraftfahrzeuges zum Ablenken von in einem Vorwärtsbetriebszustand des Kraftfahrzeugs anströmender Luft in eine Windschattenzone des Frachtbehälters.

Ferner betrifft die Erfindung einen Frachtbehälter für ein Kraftfahrzeug und ein Kraftfahrzeug.

Schließlich betrifft die Erfindung eine Verwendung einer Heckluftlenkeinrichtung und eines Frachtbehälters.

Es existieren eine Vielzahl von Kraftfahrzeugen auf den Straßen die zum Transport von Gütern und Personen eingesetzt werden. Viele dieser Kraftfahrzeuge weisen einen kastenförmigen Aufbau auf oder umfassen einen Anhänger mit einem kastenförmigen Aufbau. Bekanntermaßen sind diese kastenförmigen Aufbauten aerodynamisch ungünstig. Allerdings sind solche kastenförmigen Aufbauten vergleichsweise einfach herzustellen und ermöglichen ein einfaches und effizientes Beladen. Darüber hinaus weisen sie üblicherweise standardisierte Maße auf, so dass sich diese für einen effizienten Transport und eine effiziente Lagerung leicht stapeln lassen können.

Die Problematik der mangelnden aerodynamischen Effizienz solch kastenförmiger Aufbauten ist bekannt. Es existieren daher aerodynamische Leitvorrichtungen für Kraftfahrzeuge, um die aerodynamische Effizienz von Fahrzeugen, insbesondere Nutzkraftfahrzeugen wie Lastkraftwagen, zu verbessern. Solche Leitvorrichtungen können beispielsweise bei Sattelaufliegern eingesetzt werden. Aus der US 6,932,419 B1 ist beispielsweise eine aerodynamische Führungsanordnung für ein Fahrzeug bekannt, die die aerodynamische Effizienz des Fahrzeugs durch automatisches Schließen einer vorderen Spaltabdeckung bei hohen Geschwindigkeiten verbessert. Die DE 10 2009 027 950 A1 betrifft eine Windleiteinrichtung für ein Nutzfahrzeug, insbesondere für einen Sattelauflieger, die einen Diffusor am Heck und einen aerodynamischen Anströmkörper aufweist, um den Luftwiderstand des Fahrzeugs zu reduzieren.

Solche existierenden Lösungen zur Verbesserung der aerodynamischen Eigenschaften von Kraftfahrzeugen sind oftmals in ihrer Gestaltung auf spezielle Fahrzeugtypen abgestimmt und nicht ohne weiteres auf andere Fahrzeugtypen übertragbar. Außerdem bestehen sie oft aus mehreren Einzelteilen, die separat an verschiedenen Bereichen des Fahrzeugs montiert werden müssen, was einen erheblichen Arbeitsaufwand bei der Montage verursachen kann, sowie zeit- und kostenintensive Wartungs- und Reparaturarbeiten bedingen können. Ferner sind manche der bekannten Lösungen in solcher Weise ausgestaltet, dass sie erst ab einer bestimmten Geschwindigkeit reagieren bzw. funktionieren, d.h. die aerodynamische Effizienz eines Kraftfahrzeugs erst ab einer bestimmten Geschwindigkeit gesteigert wird.

Es ist bekannt, dass das Fahren im Windschatten eines voranfahrenden Kraftfahrzeugs den Windwiderstand und somit den Kraftstoffverbrauch des im Windschatten nachanfahrenden Kraftfahrzeugs erheblich minimieren kann. Dies bedingt allerdings, dass das nachfahrende Kraftfahrzug den erforderlichen Sicherheitsabstand zum voranfahrenden Fahrzeug nicht einhalten kann. Dieses Fahren im Windschatten verstößt etwa in Deutschland nicht nur gegen Verkehrsregeln, sondern stellt bei manueller Fahrt und Steuerung des Fahrzeugs in einer Fahrzeugkolonne ein Sicherheitsrisiko dar. Um dieses Sicherheitsrisiko zu reduzieren bzw. auszuräumen, wurden Ansätze entwickelt, Kraftfahrzeuge mit Hilfe einer Steuerungsvorrichtung zu vernetzen, so dass diese im geringen Abstand zueinander im jeweiligen Windschatten des voranfahrenden Kraftfahrzeugs fahren können ("Platooning").

Sofern die Kraftfahrzeuge entsprechend technisch aus- bzw. nachgerüstet sind bzw. werden, ist ein Fahren in Kolonne bei "normalen" Verkehrsbedingungen technisch zwar möglich und wohl vergleichsweise sicher, zumindest dürfte hierdurch die Gefahr von Auffahrunfällen minimiert sein. Diese technische Lösung schützt jedoch nicht vor Steinschlägen, die beim Fahren in Kolonne im Windschatten aufgrund des geringen Abstands des nachfahrenden Kraftfahrzeugs zum voranfahrenden Kraftfahrzeug gleichwohl erhöht sein dürfte. Fraglich ist darüber hinaus, wie sich eine solch vernetzte Fahrzeugkolonne etwa bei zähfließendem Verkehr verhält, wie solche Kraftfahrzeuge gegen Hackerangriffe geschützt sind, und wie die Mensch-Maschine/Technik-Interaktion in Abhängigkeit der verschiedenen möglichen Verkehrssituationen auszugestalten ist. Ganz abgesehen davon, erfordert diese technische Lösung eine Anpassung der gesetzlichen Vorgaben, in Deutschland etwa der Straßenverkehrsordnung. Darüber hinaus stellt sich die praktische Herausforderung, dass eine Effizienzsteigerung nur erzielt werden kann, wenn eine ausreichende Anzahl von Kraftfahrzeugen unterwegs ist, die mit der für das Kolonnenfahren erforderlichen Technik ausgestattet sind, so dass ein Fahren in einer Fahrzeugkolonne im Windschatten des jeweils voranfahrenden Kraftfahrzeuges nicht nur technisch möglich, sondern auch wahrscheinlich ist. Denn wenn ein Kraftfahrzeug mit zumindest einem anderen Kraftfahrzeug keine Fahrzeugkolonne bilden kann, können sich (zumindest in Summe) auch keine Effizienzsteigerung, d.h. Kraftstoffeinsparungen ergeben.

Es ist daher eine Aufgabe der vorliegenden Erfindung, eine Lösung bereitzustellen, die einen oder mehrere der oben genannten Nachteile verringert oder beseitigt. Insbesondere ist es eine Aufgabe der vorliegenden Erfindung, eine Heckluftlenkeinrichtung, einen Frachtbehälter und ein Kraftfahrzeug bereitzustellen, welches hinsichtlich der aerodynamischen Effizienz des Frachtbehälters bzw. des Kraftfahrzeugs verbessert ist. Insbesondere ist eine Aufgabe, eine solche Heckluftlenkeinrichtung bereitzustellen, die sich aufwandsarm herstellen lässt und die insbesondere ein einfaches Nachrüsten von Frachtbehältern bzw. Kraftfahrzeugen mit dieser Heckluftlenkeinrichtung ermöglicht.

Weitere Aufgaben ergeben sich aus der nachfolgenden Beschreibung und den Patentansprüchen. Der Gegenstand der vorliegenden Erfindung wird in den beigefügten Patentansprüchen und der vorliegenden Beschreibung definiert.

Gemäß einem ersten Aspekt der Erfindung werden die vorstehend genannten Aufgaben durch eine Heckluftlenkeinrichtung nach Anspruch 1 gelöst. Diese Heckluftlenkeinrichtung ist eine Heckluftlenkeinrichtung für einen Frachtbehälter eines Kraftfahrzeuges. In einem Vorwärtsbetriebszustand des Kraftfahrzeugs dient diese Heckluftlenkeinrichtung zum Ablenken der in dem Vorwärtsbetriebszustand des Kraftfahrzeugs anströmenden Luft in eine Windschattenzone des Frachtbehälters. Somit ist die Heckluftlenkeinrichtung insbesondere ausgebildet, die anströmende Luft, welche im Vorwärtsbetriebszustand des Kraftfahrzeuges am Frachtbehälter entlangströmt, am oder im Bereich des Hecks des Frachtbehälters in den Windschatten hinter den Frachtbehälter zu lenken.

Als Frachtbehälter kommt prinzipiell jede Art von Behälter in Betracht, der zur Lagerung und zum Transport von Gütern, einschließlich Flüssigkeiten, und/oder aber auch von Personen geeignet ist. Beispielsweise ist der Frachtbehälter ein Kofferraum eines Kraftfahrzeuges, ein Laderaum eines Transporters (Kastenwagens), ein Container oder ein Sattelauflieger eines Sattelzuges.

Nach der Erkenntnis des Erfinders mindert die erfindungsgemäße Heckluftlenkeinrichtung hierdurch die Sogwirkung im Windschattenbereich des Frachtbehälters im Vorwärtsbetriebszustand. Dies liegt im Wesentlichen daran, dass der Bereich des Windschattens hinter dem Frachtbehälter, d.h. der Bereich in dem die Luft eine geringere Strömungsgeschwindigkeit aufweist als die den Frachtbehälter anströmende Luft, durch die Umlenkung der anströmenden Luft im Vorwärtsbetriebszustand nach unten hinter den Frachtbehälter, geringer wird. Die verminderte Sogwirkung wirkt sich auf einen verminderten Kraftstoffverbrauch und Schadstoffausstoß des Kraftfahrzeugs aus.

Bei der Ausgestaltung der Heckluftlenkeinrichtung ist hierbei insbesondere zu beachten, dass diese in einer solchen Weise ausgestaltet ist, dass der durch die Heckluftlenkeinrichtung resultierende zusätzliche Luftwiderstand nicht größer ist als der durch die Heckluftlenkeinrichtung resultierende reduzierte Sog im Windschatten des Frachtbehälters des Kraftfahrzeugs. Denn die Heckluftlenkeinrichtung vergrößert den Querschnitt des Frachtbehälters bzw. des Kraftfahrzeugs, der im Vorwärtsbetriebszustand im anströmenden Fahrtwind "steht" gemäß $F = \frac{1}{2} * \rho * V^2 * A * C_W$. Hierbei ist F die Luftwiderstandskraft, $\rho$ die Dichte des Fluid, V die Geschwindigkeit der Luft, mit der der Frachtbehälter bzw.

das Kraftfahrzeug inkl. der Heckluftlenkeinrichtung angeströmt wird, A die Referenzfläche, welche im Vorwärtsbetriebszustand orthogonal zur Fahrtrichtung bzw. zur Richtung der anströmenden Luft steht, und $C_W$ der Luftwiderstandsbeiwert. Da der durch die Heckluftlenkeinrichtung resultierende Querschnitt im Vergleich zum Querschnitt des Frachtbehälters bzw. des Kraftfahrzeugs vergleichsweise gering ist, ist der Einfluss der Heckluftlenkeinrichtung auf den Luftwiderstand des Frachtbehälters bzw. Kraftfahrzeugs vergleichsweise gering. Durch das Ablenken der das Kraftfahrzeug bzw. den Frachtbehälter im Vorwärtsbetriebszustand anströmenden Luft, wird die anströmende Luft in Abhängigkeit eines Neigungswinkels hinter das Kraftfahrzeug bzw. hinter den Frachtbehälter gelenkt, was den Windschattenbereich und damit die Sogwirkung hinter dem Kraftfahrzeug bzw. hinter dem Frachtbehälter erheblich reduziert. Der Erfinder erwartet auf Grund experimenteller Untersuchungen eine Reduktion der Sogwirkung zwischen 30 % und 40 %.

Um diesen gewünschten Effekt erzielen zu können, umfasst die Heckluftlenkeinrichtung einen Luftkanal, der sich in einer Längsrichtung zwischen einer Lufteinlassöffnung und einer Luftauslassöffnung mit einer Luftkanallänge erstreckt. Darüber hinaus erstreckt sich der Luftkanal in einer Querrichtung orthogonal zur Längsrichtung mit einer Luftkanalbreite und orthogonal zur Längsrichtung und orthogonal zur Querrichtung mit einer Luftkanalhöhe. Der Luftkanal ist hierbei ausgebildet, im Vorwärtsbetriebszustand des Kraftfahrzeugs die anströmende Luft durch den Luftkanal von der Lufteinlassöffnung zu der Luftauslassöffnung in Richtung der Windschattenzone des Frachtbehälters zu lenken, d.h. die Heckluftlenkeinrichtung bzw. der Luftkanal lenkt die den Frachtbehälter im Vorwärtsbetriebszustand anströmende Luft hinter dem Frachtbehälter nach unten in den Bereich des Windschattens ab.

Hierbei weist die Lufteinlassöffnung des Luftkanals eine erste Querschnittsfläche auf und die Luftauslassöffnung weist eine zweite Querschnittsfläche auf, wobei die zweite Querschnittsfläche kleiner ist als die erste Querschnittsfläche.

Vorzugsweise verändert sich die Querschnittsfläche des Luftkanals zwischen der Lufteinlassöffnung und der Luftauslassöffnung. Ergänzend oder alternativ ist es bevorzugt, dass die Querschnittsfläche zwischen der Lufteinlassöffnung und der Luftauslassöffnung variiert. Insbesondere ist es bevorzugt, dass die Querschnittsfläche des Luftkanals zwischen der Lufteinlassöffnung und der Luftauslassöffnung abnimmt.

Um nun die Sogwirkung in dem Windschattenbereich des Frachtbehälters im Vorwärtsbetriebszustands des Kraftfahrzeugs zu reduzieren, ist eine Flächennormale der zweiten Querschnittsfläche gegenüber einer Flächennormale der ersten Querschnittsfläche um einen Neigungswinkel geneigt, so dass die im Vorwärtsbetriebszustand des Kraftfahrzeugs durch den Luftkanal strömende Luft an der der zweiten Querschnittsfläche an der Luftauslassöffnung des Luftkanals in Richtung der Windschattenzone des Frachtbehälters abgelenkt wird. Insbesondere wird die durch den Luftkanal geführte Luft, durch die sich verkleinernde Querschnittsfläche beschleunigt. Hierdurch weist die im Luftkanal beschleunigte Luft einen geringeren statischen Druck auf als die außerhalb des Luftkanals am Luftkanal und/oder am Kraftfahrzeug und/oder am Frachtbehälter entlang strömende Luft. Hierdurch wird die außerhalb des Luftkanals, insbesondere oberhalb des Luftkanals entlang strömende Luft am Heck bzw. im Heckbereich, nach unten in die Sogregion im Windschattenbereich gesogen, so dass die aerodynamische Effizienz des Frachtbehälters bzw. des Kraftfahrzeugs durch die Verwendung der Heckluftlenkeinrichtung erzielt wird.

Vorzugsweise wird der Luftkanal durch eine Luftkanalwand zwischen der Lufteinlassöffnung und der Luftauslassöffnung räumlich begrenzt. Es kann bevorzugt sein, dass eine Luftkanalwand ringförmig oder teilringförmig ausgebildet ist. Insbesondere kann es bevorzugt sein, dass die Luftkanalwand rohrförmig ausgebildet ist. Es kann bevorzugt sein, die Luftkanalwand in einer solchen Weise auszugestalten, dass dieser einen spaltförmigen Luftkanal ausbildet, wobei dessen Erstreckung über eine Breite und eine Länge größer ist als über eine Höhe des Luftkanals.

Vorzugsweise setzt sich die Luftkanalwand aus zwei Luftkanalseitenwänden, einer Luftkanaloberwand und einer Luftkanalunterwand zusammen. Vorzugsweise erstrecken sich die beiden Luftkanalseitenwände im Wesentlichen parallel zueinander. Prinzipiell ist es aber auch denkbar, dass die beiden Luftkanalseitenwände zueinander geneigt angeordnet sind. Insbesondere erstrecken sich die Luftkanaloberwand und die Luftkanalunterwand parallel zueinander. Prinzipiell ist es aber auch denkbar, dass die Luftkanaloberwand und die Luftkanalunterwand zueinander geneigt angeordnet sind. Vorzugsweise sind die beiden Luftkanalseitenwände und die Luftkanaloberwand und die Luftkanalunterwand in einer solchen Weise zueinander angeordnet, dass sich ein rechteckförmiger Querschnitt ergibt. Prinzipiell können die beiden Luftkanalseitenwände und die Luftkanaloberwand und die Luftkanalunterwand auch in einer solchen Weise zueinander angeordnet sein, dass sich ein trapezförmiger Querschnitt ergibt.

Prinzipiell ist es denkbar, dass die beiden Luftkanalseitenwände abschnittsweise parallel zueinander verlaufen und/oder abschnittsweise geneigt zueinander verlaufen. Ferner kann es bevorzugt sein, dass die Luftkanaloberwand und die Luftkanalunterwand abschnittsweise parallel zueinander verlaufen und/oder abschnittsweise geneigt zueinander verlaufen.

Vorzugsweise ist es vorgesehen, dass die Luftkanaloberwand breiter ist als die Luftkanalunterwand. Alternativ kann es bevorzugt sein, dass die Luftkanaloberwand schmaler ist als die Luftkanalunterwand. Darüber hinaus kann es bevorzugt sein, dass die Luftkanaloberwand länger ist als die Luftkanalunterwand. Alternativ kann es bevorzugt sein, dass die Luftkanaloberwand kürzer ist als die Luftkanalunterwand.

Ferner ist in den bevorzugten Ausführungsformen der Heckluftlenkeinrichtung vorgesehen, dass die Luftkanaloberwand oberhalb der Luftkanalunterwand angeordnet ist, wobei die Luftkanaloberwand und die Luftkanalunterwand abschnittsweise parallel verlaufen können und/oder sich abschnittsweise geneigt zueinander erstrecken, so dass die Querschnittsfläche des Querschnitts des Luftkanals zwischen der Lufteinlassöffnung und der Luftauslassöffnung variiert. Es ist zu verstehen, dass die Luftkanalunterwand abschnittsweis oder vollständig durch die Deckenwand des Frachtbehälters ausgebildet sein kann.

Der Luftkanal kann mehrere Luftkanalabschnitte aufweisen. Einer oder mehrere der Luftkanalabschnitte können einen konstanten Querschnitt bzw. eine konstante Querschnittsfläche aufweisen. Ergänzend oder alternativ weist einer der Luftkanalabschnitte oder weisen mehrere der Luftkanalabschnitte einen variierenden Querschnitt bzw. eine variierende Querschnittsfläche auf. Ein Luftkanalabschnitt kann insbesondere einen sich linear verändernde Querschnittsfläche aufweisen. Ergänzend oder alternativ kann der Luftkanalabschnitt eine sich in Abhängigkeit einer konvexen und/oder konkaven Funktion verändernde Querschnittsfläche aufweisen.

Es kann beispielsweise ein Luftkanal bevorzugt sein, der ausgehend von der Lufteinlassöffnung einen Luftkanalabschnitt mit einer variierenden Querschnittsfläche aufweist, wobei die Querschnittsfläche ausgehend von der Lufteinlassöffnung abnimmt. An diesen Luftkanalabschnitt mit variierender Querschnittsfläche kann sich ein Luftkanalabschnitt mit einer konstanten Querschnittsfläche anschließen, der sich bis zur Luftauslassöffnung erstreckt. Hierbei ist vorgesehen, dass die Querschnittsfläche des konstanten Luftkanalabschnitts der minimalen Querschnittsfläche des Luftkanals mit der variierenden Querschnittsfläche entspricht.

Vorzugsweise sind die Übergänge zwischen Luftkanalabschnitten kontinuierlich ausgebildet. Es kann bevorzugt sein, die Übergänge als Knick oder stufenförmig ausgebildet sind.

Alternativ kann es beispielsweise bevorzugt sein, dass ein Luftkanal zwei Luftkanalabschnitte mit jeweils einer konstanten Querschnittsfläche und einen Luftkanalabschnitt mit einer variierenden Querschnittsfläche aufweist. Hierbei ist es bevorzugt, dass die konstante Querschnittsfläche des einen Luftkanalabschnitts größer ist als die konstante Querschnittsfläche des anderen Luftkanalabschnitts, wobei sich der Luftkanalabschnitt mit der größeren konstanten Querschnittsfläche ausgehend von der Lufteinlassöffnung in Richtung der Luftauslassöffnung erstreckt und der Luftkanalabschnitt mit der kleineren konstanten Querschnittsfläche ausgehend von der Luftauslassöffnung in Richtung der Lufteinlassöffnung erstreckt und zwischen den beiden Luftkanalabschnitten mit der konstanten Querschnittsfläche der Luftkanalabschnitt mit der variierenden Querschnittsfläche erstreckt. Der Luftkanalabschnitt mit der variierenden Querschnittsfläche weist hierbei auf der einen Seite eine Querschnittsfläche auf, die der größeren konstanten Querschnittsfläche entspricht und auf der anderen Seite eine Querschnittsfläche auf, die der kleineren Querschnittsfläche entspricht.

Es ist zu verstehen, dass ein Luftkanal oder ein Luftkanalabschnitt mit einer variierenden Querschnittsfläche eine sich verjüngenden Kanalquerschnitt aufweist. Beispielsweise ist bei einem Luftkanal oder einem Luftkanalabschnitt mit einem sich verjüngenden Kanalquerschnitt von 5% die Querschnittsfläche vom Auslass des Luftkanals bzw. des Luftkanalabschnitts gegenüber der Querschnittsfläche am Einlass des Luftkanals bzw. des Luftkanalabschnitts um 5% kleiner. Verjüngt sich ein Kanalquerschnitt eines Luftkanals oder eines Luftkanalabschnitts um 95%, ist die Querschnittsfläche vom Auslass des Luftkanals bzw. des Luftkanalabschnitts gegenüber der Querschnittsfläche am Einlass des Luftkanals bzw. des Luftkanalabschnitts um 95% kleiner.

Gemäß einer ersten bevorzugten Ausführungsform der Heckluftlenkeinrichtung verläuft die erste Flächennormale parallel zur anströmenden Luft. Gemäß dieser Ausführungsform liegt der Neigungswinkel zwischen den beiden Flächennormalen in einem Bereich von mindestens 10°, bevorzugt mindestens 15°, insbesondere bevorzugt mindestens 20°. Ergänzend oder alternativ liegt der Neigungswinkel in einem Bereich von maximal 30°, bevorzugt maximal 55°, insbesondere bevorzugt maximal 80°.

Nach der Erkenntnis des Erfinders mindert eine Heckluftlenkeinrichtung gemäß dieser Ausführungsform die Sogwirkung im Windschattenbereich des Frachtbehälters im Vorwärtsbetriebszustands in besonderer Weise, was den Kraftstoffverbrauch und den Schadstoffausstoß des Kraftfahrzeugs reduziert. Dies liegt nach der Erkenntnis des Erfinders daran, dass in dem/den oben genannten Bereich(en) des Neigungswinkels der Luftstrom laminar ist. Hierbei lässt sich die Sogwirkung umso mehr verringern, desto größer der Neigungswinkel ist, d.h. je steiler der aus der Heckluftlenkeinrichtung geführte Luftstrom in den Windschatten des Kraftfahrzeugs geleitet wird. Allerdings ist zu berücksichtigen, dass der Windwiderstand zunimmt, je größer der Neigungswinkel der Heckluftlenkeinrichtung ist. Ferner besteht insbesondere bei einem Neigungswinkel ab 80° die Gefahr, dass an dem Luftkanal außerhalb entlangströmende Luft von der durch den Luftkanal hindurchgeführten und beschleunigten Luft abreißt bzw. abtrennt, was zu Verwirbelungen führt, so dass sich dann keine aerodynamischen Effizienzsteigerungen erzielen lassen.

Nach einer weiteren bevorzugten Fortbildung der Heckluftlenkeinrichtung weist der Luftkanal einen Kanalquerschnitt auf, der zwischen der Lufteinlassöffnung und der Luftauslassöffnung eine Verjüngung aufweist, die in einem Bereich von mindestens 5% liegt und/oder maximal 95 % liegt. Hierbei ist zu verstehen, dass in Abhängigkeit der Verjüngung, des Luftkanals die durch den Luftkanal strömende Luft beschleunigt wird. In Abhängigkeit der Beschleunigung bzw. der Geschwindigkeit der Luft, welche sie beim Austritt aus dem Luftkanal an der Luftauslassöffnung aufweist, kann der Neigungswinkel gewählt werden. Hierbei kann der Neigungswinkel umso größer gewählt werden, je höher die Geschwindigkeit der durch den Luftkanal strömenden Luft an der Luftauslassöffnung ist.

Weiterhin ist gemäß einer bevorzugten Fortbildung der Heckluftlenkeinrichtung vorgesehen, dass der Luftkanal als Düse ausgebildet ist oder einen Luftkanalabschnitt aufweist, der als Düse ausgebildet ist, wobei sich ein Querschnitt des Luftkanals oder des Luftkanalabschnitts in Richtung der Luftauslassöffnung verjüngt.

Ferner weist nach einer bevorzugten Ausführungsform der Heckluftlenkeinrichtung der Luftkanal einen oder mehrere der folgenden Luftkanalabschnitte auf: einen Lufteinlass-Kanalabschnitt, der sich ausgehend von der Lufteinlassöffnung in Richtung der Luftauslassöffnung erstreckt, wobei der Lufteinlass-Kanalabschnitt vorzugsweise als Düse ausgebildet ist, deren Eintrittsöffnung der Lufteinlassöffnung entspricht; und/oder einen Luftauslass-Kanalabschnitt, der sich ausgehend von der Luftauslassöffnung in Richtung der Lufteinlassöffnung erstreckt, wobei die Austrittsöffnung des Luftauslass-Kanalabschnitts der Luftauslassöffnung entspricht; und/oder einen Mittelkanalabschnitt, der zwischen der Lufteinlassöffnung und der Luftauslassöffnung, insbesondere dem Lufteinlass-Kanalabschnitt und dem Luftauslass-Kanalabschnitt angeordnet ist, wobei der Mittelkanalabschnitt vorzugsweise einen konstanten Querschnitt aufweist.

Weiterhin ist in einer bevorzugten Ausführungsform der Heckluftlenkeinrichtung vorgesehen, dass der Lufteinlass-Kanalabschnitt einen Querschnitt aufweist, der sich in Richtung der Luftauslassöffnung verjüngt. Ergänzend oder alternativ ist in bevorzugter Weise vorgesehen, dass der Luftauslass-Kanalabschnitt einen konstanten Querschnitt und/oder eine konstante Querschnittsfläche aufweist. Darüber hinaus ist ergänzend oder alternativ vorgesehen, dass der Mittelkanalabschnitt einen konstanten Querschnitt und/oder eine konstante Querschnittsfläche aufweist.

In einer weiteren bevorzugten Fortbildung der Heckluftlenkeinrichtung ist vorgesehen, dass der Querschnitt des Luftauslass-Kanalabschnitts dem Querschnitt des Mittelkanalabschnitts entspricht. Ergänzend oder alternativ ist vorzugsweise vorgesehen, dass die Querschnittsfläche des Luftauslass-Kanalabschnitts der Querschnittsfläche des Mittelkanalabschnitts entspricht. Ergänzend oder alternativ ist bevorzugt ferner vorgesehen, dass der Querschnitt des Lufteinlass-Kanalabschnitts sich ausgehend von der Lufteinlassöffnung derart verjüngt, dass der Querschnitt dem Querschnitt des Mittelkanalabschnitts entspricht. Weiterhin ist in bevorzugter Weise ergänzend oder alternativ vorgesehen, dass die Querschnittsfläche des Lufteinlass-Kanalabschnitts ausgehend von der Lufteinlassöffnung derart abnimmt, dass die Querschnittsfläche der Querschnittsfläche des Mittelkanalabschnitts entspricht.

Nach einer weiteren bevorzugten Fortbildung der Heckluftlenkeinrichtung ist der Luftkanal im Lufteinlass-Kanalabschnitt gekrümmt. Ergänzend oder alternativ ist es bevorzugt, dass der Luftkanal im Luftauslass-Kanalabschnitt gekrümmt ist. Ergänzend oder alternativ ist der Mittelkanalabschnitt vorzugsweise gerade.

Ferner weist gemäß einer bevorzugten Fortbildung der Heckluftlenkeinrichtung der Luftkanal einen polygonalen, insbesondere rechteckigen, Querschnitt oder einen teilringförmigen Querschnitt auf.

Gemäß einer ferner bevorzugten Ausführungsform der Heckluftlenkeinrichtung liegt die Luftkanallänge in einem Bereich von mindestens 0,05 m und/oder maximal 18,75 m. Ergänzend oder alternativ liegt die Luftkanalbreite vorzugsweise in einem Bereich von mindestens 0,05 m und/oder maximal 2,6 m. Ergänzend oder alternativ ist ferner bevorzugt, dass die Luftkanalhöhe mindestens in einem Bereich von 0,05 m liegt und/oder maximal 0,5 m liegt.

Gemäß einem zweiten Aspekt der Erfindung werden die eingangs genannten Aufgaben gemäß einem Frachtbehälter nach Anspruch 11 gelöst. Dieser Frachtbehälter ist ein Frachtbehälter für ein Kraftfahrzeug, der eine zuvor beschriebene Heckluftlenkeinrichtung gemäß dem ersten Aspekt oder bevorzugter Ausführungsformen davon aufweist.

Gemäß einer ersten bevorzugten Ausführungsform des Frachtbehälters weist der Frachtbehälter ein Heck auf, wobei die Heckluftlenkeinrichtung an dem Heck oder im Bereich des Hecks angeordnet ist. In dem Vorwärtsbetriebszustand des Kraftfahrzeugs befindet sich das Heck an der Hinterseite des Kraftfahrzeugs bzw. des Frachtbehälters. Insbesondere befindet sich das Heck in dem Vorwärtsbetriebszustand des Kraftfahrzeugs bei einer Vorwärtsfahrt des Kraftfahrzeugs in Fahrtrichtung an der Hinterseite des Kraftfahrzeugs bzw. des Frachtbehälters.

Ferner ist nach einer bevorzugten Fortbildung des Frachtbehälters vorgesehen, dass der Frachtbehälter am Heck eine Heckkante aufweist und die Heckluftlenkeinrichtung derart an dem Heck oder im Bereich des Hecks angeordnet ist, dass die Luftauslassöffnung im Vorwärtsbetriebszustand des Kraftfahrzeuges an der Heckkante mündet oder stromabwärts der Heckkante mündet.

Gemäß einer weiteren bevorzugten Ausführungsform weist der Frachtbehälter eine Deckenwand und eine gegenüberliegend zu der Deckenwand angeordnete Bodenwand sowie zwei gegenüberliegend zueinander angeordnete Seitenwände auf, die die Bodenwand mit der Deckenwand verbinden. Es kann vorgesehen sein, dass sich die erste Flächennormale im Wesentlichen parallel zu der Deckenwand erstreckt. Ergänzend oder alternativ kann vorgesehen sein, dass sich die zweite Flächennormale im Wesentlichen geneigt zu der Deckenwand erstreckt.

Darüber hinaus erstreckt sich der Frachtbehälter gemäß einer bevorzugten Ausführungsform in Längsrichtung mit einer Frachtbehälterlänge und in Querrichtung orthogonal zur Längsrichtung mit einer Frachtbehälterbreite. Hierbei kann vorgesehen sein, dass die Luftkanallänge der Frachtbehälterlänge entspricht oder kleiner ist als die Frachtbehälterlänge. Ergänzend oder alternativ kann vorgesehen sein, dass die Luftkanalbreite der Frachtbehälterbreite entspricht oder kleiner ist als die Frachtbehälterbreite.

Gemäß einem dritten Aspekt der Erfindung werden die eingangs genannten Aufgaben gemäß einem Kraftfahrzeug nach Anspruch 16 gelöst. Das Kraftfahrzeug weist eine Heckluftlenkeinrichtung auf, wie diese zuvor hinsichtlich des ersten Aspekts sowie möglicher bevorzugter Ausführungsformen beschrieben worden ist. Ergänzend oder alternativ ist in bevorzugter Weise vorgesehen, dass das Kraftfahrzeug einen Frachtbehälter aufweist, wie dieser zuvor hinsichtlich des zweiten Aspekts sowie möglicher bevorzugter Ausführungsformen beschrieben worden ist.

In einer ersten bevorzugten Ausführungsform weist das Kraftfahrzeug eine Sattelzugmaschine auf, wobei der Frachtbehälter im Vorwärtsbetriebszustand des Kraftfahrzeugs hinter der Sattelzugmaschine angeordnet ist.

Gemäß einem vierten Aspekt der Erfindung werden die eingangs genannten Aufgaben durch die Verwendung einer Heckluftlenkeinrichtung, wie diese hinsichtlich des ersten Aspekts sowie möglicher bevorzugter Ausführungsformen beschrieben worden ist, für einen Frachtbehälter und/oder ein Kraftfahrzeug mit einem Frachtbehälter gelöst.

Gemäß einem fünften Aspekt der Erfindung werden die eingangs genannten Aufgaben durch die Verwendung eines Frachtbehälters, wie dieser hinsichtlich des zweiten Aspekts sowie möglicher bevorzugter Ausführungsformen beschrieben worden ist, für ein Kraftfahrzeug gelöst.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen der Heckluftlenkeinrichtung sowie der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:

Figur 1    eine schematische Seitenansicht eines Kraftfahrzeugs mit einer Heckluftlenkeinrichtung gemäß einer bevorzugten Ausführungsform im Längsquerschnitt;

Figur 2    eine schematische Seitenansicht einer Heckluftlenkeinrichtung gemäß einer bevorzugten Ausführungsform im Längsquerschnitt;

Figur 3    eine schematische Seitenansicht einer Heckluftlenkeinrichtung gemäß einer weiteren bevorzugten Ausführungsform im Längsquerschnitt;

Figur 3a   eine schematische Seitenansicht einer Heckluftlenkeinrichtung gemäß einer weiteren bevorzugten Ausführungsform im Längsquerschnitt;

Figur 3b   eine schematische Seitenansicht einer Heckluftlenkeinrichtung gemäß einer weiteren bevorzugten Ausführungsform im Längsquerschnitt;

Figur 4    eine schematische Seitenansicht einer Heckluftlenkeinrichtung gemäß einer weiteren bevorzugten Ausführungsform im Längsquerschnitt;

Figur 5a   ein exemplarisches Strömungsbild einer Strömungssimulation, bei der ein Frachtbehälter keine erfindungsgemäße Heckluftlenkeinrichtung aufweist;

Figur 5b   ein exemplarisches Strömungsbild einer Strömungssimulation, bei der ein Frachtbehälter eine erfindungsgemäße Heckluftlenkeinrichtung aufweist;

Figur 6a   eine exemplarische Darstellung des Drucks einer Strömungssimulation, bei der ein Frachtbehälter keine erfindungsgemäße Heckluftlenkeinrichtung aufweist;

Figur 6b   eine exemplarische Darstellung des Drucks einer Strömungssimulation, bei der ein Frachtbehälter eine erfindungsgemäße Heckluftlenkeinrichtung aufweist; und

Figur 7    eine schematische Seitenansicht eines Kraftfahrzeugs mit einer Heckluftlenkeinrichtung gemäß einer weiteren bevorzugten Ausführungsform im Längsquerschnitt.

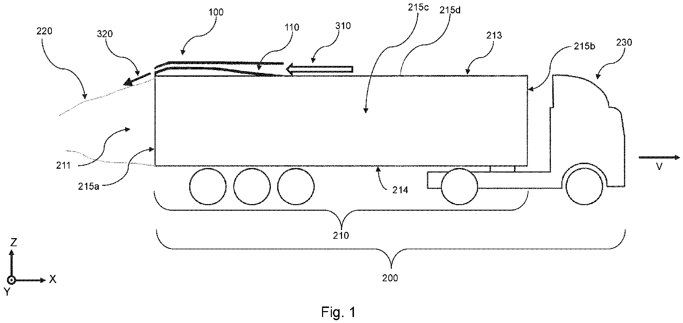

Figur 1 zeigt eine schematische Seitenansicht eines Kraftfahrzeugs 200 mit einer Heckluftlenkeinrichtung 100 gemäß einer bevorzugten Ausführungsform im Längsquerschnitt. In dem vorliegenden Beispiel ist zur Veranschaulichung der Erfindung das Kraftfahrzeug ein Nutzfahrzeug. Prinzipiell ist die Erfindung jedoch nicht auf einen bestimmten Kraftfahrzeugtyp beschränkt. So kann das Kraftfahrzeug als Nutzfahrzeug beispielsweise auch ein Kastenwagen sein oder ein Personenkraftfahrzeug, beispielsweise ein sogenannter Camper-Van sein.

Als Frachtbehälter 210 kommt prinzipiell jede Art von Behälter in Betracht, der zur Lagerung und zum Transport von Gütern, einschließlich Flüssigkeiten, oder aber auch von Personen geeignet ist. Beispielsweise ist der Frachtbehälter ein Kofferraum eines Kraftfahrzeuges, ein Laderaum eines Transporters (Kastenwagens), ein Container oder ein Sattelauflieger eines Sattelzuges.

Bei der in Figur 1 dargestellten Ausführungsform des Kraftfahrzeuges 200 ist das Kraftfahrzeug 200 ein Sattelzug, der eine Sattelzugmaschine 230 und einen Lastzug oder Sattelauflieger mit einem Frachtbehälter 210 umfasst. Die Sattelzugmaschine ist dabei in geeigneter Art und Weise mit dem Lastzug oder Sattelauflieger für eine Vorwärtsfahrt V im Vorwärtsbetriebszustand verbunden.

Als Sattelauflieger kommen prinzipiell verschiedene Arten in Betracht. Beispielsweise kann der Sattelauflieger ein Planenauflieger, ein Kofferauflieger, ein Kühlgutauflieger, ein Kippmuldenauflieger, ein Tiefladeauflieger, ein Pritschenauflieger, ein Schubbodenauflieger, ein Siloauflieger, ein Tankauflieger, ein Innenladeauflieger, ein Fahrzeugtransportauflieger, ein Personentransportauflieger oder ein anderer geeigneter Sattelauflieger sein. Der Sattelauflieger kann beispielsweise aber auch ein Containerauflieger (Containerchassis) sein, auf dem ein Container als Frachtbehälter 210 angebracht ist. Der Frachtbehälter 210 ist im Vorwärtsbetriebszustand bei der Vorwärtsfahrt V des Sattelzugs hinter der Sattelzugmaschine 230 angeordnet.

In der vorliegend dargestellten Ausführungsform in Figur 1 hat der Frachtbehälter 210 im Wesentlichen die Außenkontur eines Quaders. Der Frachtbehälter 210 umfasst eine Deckenwand 213, eine Bodenwand 214 sowie vier Seitenwände 215a, 215b, 215c, 215d. Hierbei ist die Deckenwand 213 gegenüberliegend zur Bodenwand 214 angeordnet und erstreckt sich im Wesentlichen parallel zur Bodenwand. Im Betrieb des Kraftfahrzeugs ist die Deckenwand 213 üblicherweise oberhalb der Bodenwand angeordnet, so wie dies auch in Figur 1 dargestellt ist. Sowohl die Deckenwand 213 als auch die Bodenwand 214 erstrecken ich jeweils im Wesentlichen orthogonal zu den Seitenwänden 215a-d.

Eine der vier Seitenwände ist eine vordere Seitenwand 215b, welche im Vorwärtsbetriebszustand hinter der Sattelzugmaschine 230, dieser zugewandt angeordnet ist. Parallel hierzu erstreckt sich parallel zu der vorderen Seitenwand 215b eine hintere Seitenwand 215a, welche im Vorwärtsbetriebszustand hinter bzw. stromabwärts der vorderen Seitenwand 215b angeordnet ist. Zwischen der vorderen und hinteren Seitenwand 215a,b erstrecken sich seitliche Seitenwände 215c,d im Wesentlichen parallel zueinander. Die Seitenwände 215a-d sind dabei derart zueinander angeordnet, dass diese einen Frachtraum des Frachtbehälters bilden.

Der Frachtbehälter erstreckt sich in Längsrichtung X mit einer Frachtbehälterlänge, in Querrichtung Y mit einer Frachtbehälterbreite, und in vertikaler Richtung Z mit einer Frachtbehälterhöhe. Somit erstrecken sich die vordere und hintere Seitenwand 215a,b im Wesentlichen über die Frachtbehälterbreite und die Frachtbehälterhöhe und die seitlichen Seitenwände 215c,d über die Frachtbehälterlänge und die Frachtbehälterhöhe.

Im Vorwärtsbetriebszustand des Kraftfahrzeugs bildet der Frachtbehälter ein Heck 211 aus. Dass Heck 211 befindet sich hierbei im Bereich bzw. an der hinteren Seitenwand 215a. Ferner weist der Frachtbehälter eine Heckkante 212 auf. Die Heckkante 212 ist die Kante, welche durch die hintere Seitenwand 215a und die Deckenwand 213 gebildet wird.

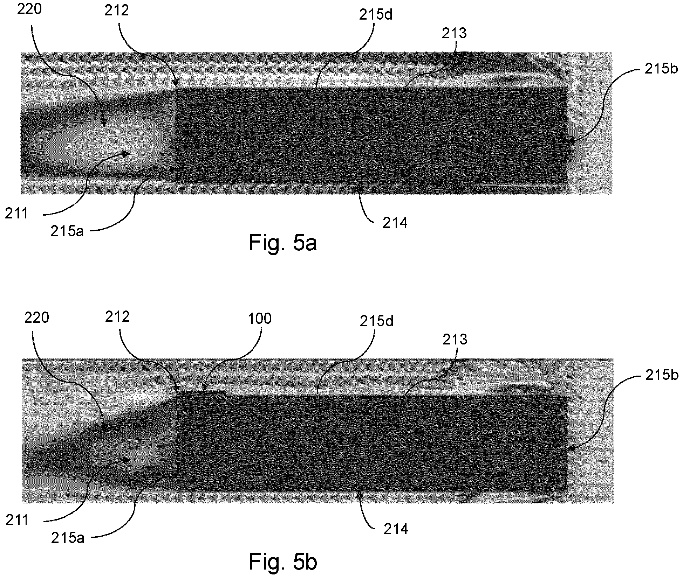

Bei der Vorwärtsbewegung V des Kraftfahrzeugs 200 in einem Vorwärtsbetriebszustand bildet sich die Windschattenzone 220 hinter dem Heck 211 bzw. der rückwärtigen Seitenwand 215a des Frachtbehälters 210. Figur 5a,b zeigen exemplarische Strömungsbilder einer Strömungssimulation an einem Frachtbehälter. In Figur 5a ist dies einmal für einen Frachtbehälter ohne die erfindungsgemäße Heckluftlenkeinrichtung gezeigt. Figur 5b visualisiert die Strömungssimulation für einen Frachtbehälter mit der erfindungsgemäßen Heckluftlenkeinrichtung. Aus den exemplarischen Strömungsbildern wird deutlich, wie der Luftstrom am Heck 211 bzw. an der Heckkante 212 in zwei Geschwindigkeitsregionen getrennt wird.

Die Figuren 1 bis 6b zeigen jeweils eine Anordnung der erfindungsgemäßen Heckluftlenkeinrichtung 100 an der Deckenwand 213 des Frachtbehälters 210 im Bereich des Hecks 211. Es ist zu erkennen, dass in den Figuren die Heckluftlenkeinrichtung 100 an der Heckkante 212 des Frachtbehälters 210 angebracht ist. Die Heckluftlenkeinrichtung 100 wird dabei in einer geeigneten Art und Weise mit dem Frachtbehälter 210 verbunden. Dabei kann es sich sowohl um temporäre als auch um dauerhafte Verbindungen der Heckluftlenkeinrichtung 100 mit dem Frachtbehälter 210 handeln. Abhängig vom Material des Frachtbehälters 210 und dem Material der Heckluftlenkeinrichtung 100 kann die Heckluftlenkeinrichtung 100 beispielsweise durch eine Schweißverbindung und/oder Schraubenverbindung und/oder Klebeverbindung und/oder eine Steckverbindung und/oder eine Klemmverbindung am Frachtbehälter 210 angebracht werden. Prinzipiell ist es auch denkbar, dass die Heckluftlenkeinrichtung 100 integral an dem Frachtbehälter insbesondere an der oder durch die Deckenwand 213 des Frachtbehälters ausgebildet sein kann (nicht dargestellt).

Die Heckluftlenkeinrichtung 100 kann aus jedem geeigneten Material gefertigt werden, das den auf die Heckluftlenkeinrichtung 100 einwirkenden Kräften standhält. Dabei können beispielsweise geeignete Metalle, Metalllegierungen, intermetallische Verbindungen, metallische Gläser, Kunststoffe, Fasern, Faserverbundwerkstoffe, organische Materialien sowie deren Kombinationen zum Einsatz kommen.

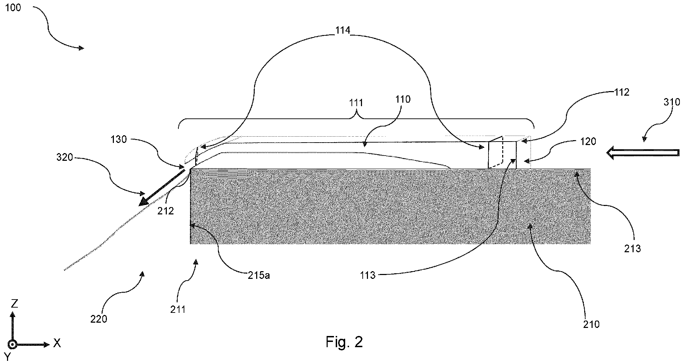

Die Heckluftlenkeinrichtung 100 ist für die Verwendung mit den vorstehend beschriebenen Kraftfahrzeugen 200 und deren Frachtbehältern 210 geeignet. Insbesondere ist der Frachtbehälter 210 geeignet gemeinsam mit der Heckluftlenkeinrichtung 100 verwendet zu werden. Die Heckluftlenkeinrichtung 100 ist dabei am Heck 211 des Frachtbehälters 210 beziehungsweise im Bereich des Hecks 211 angebracht. Die Heckluftlenkeinrichtung 100 ist dabei so am Heck 211 oder im Bereich des Hecks 211 angebracht, dass sie in einem Vorwärtsbetriebszustand des Kraftfahrzeuges 200 die anströmende Luft 310 in die Windschattenzone 220 des sich bewegenden Frachtbehälters 210 ablenkt. Wie in Figur 2 dargestellt, wird dabei die durch die Heckluftlenkeinrichtung 100 strömende Luft 310 so abgelenkt, dass sie als ausströmende Luft 320 in Richtung der Windschattenzone 220 des Frachtbehälters 210 strömt.

Die Figuren 2 bis 4 zeigen verschiedene Ansichten und bevorzugte Ausführungsformen der erfindungsgemäßen Heckluftlenkeinrichtung 100 für ein Kraftfahrzeug 200 mit einem Frachtbehälter 210.

Die Heckluftlenkeinrichtung 100 der jeweiligen Ausführungsform umfasst einen Luftkanal 110, der sich in einer Längsrichtung mit einer Luftkanallänge zwischen einer Lufteinlassöffnung 120 und einer Luftauslassöffnung 130 erstreckt. Vorzugsweise liegt die Luftkanallänge in einem Bereich von mindestens 0,05 m und maximal 18,75 m. Prinzipiell sind insbesondere auch Ausführungsformen denkbar, in denen die Luftkanallänge im Wesentlichen der Frachtbehälterlänge entspricht. Vorzugsweise ist die Luftkanallänge jedoch kleiner als die Frachtbehälterlänge.

Der Luftkanal 110 erstreckt sich vorzugsweise orthogonal zur Luftkanallänge mit einer Luftkanalbreite. In den dargestellten bevorzugten Ausführungsformen entspricht die Luftkanalbreite im Wesentlichen der Frachtbehälterbreite. Es kann allerdings bevorzugt sein, dass die Luftkanalbreite kleiner ist als die Frachtbehälterbreite. Vorzugsweise liegt die Luftkanalbreite in einem Bereich von mindestens 0,05 m und maximal 2,6 m.

Der Luftkanal 110 erstreckt sich orthogonal zur Luftkanallänge und orthogonal zur Luftkanalbreite mit einer Luftkanalhöhe. Vorzugsweise liegt die Luftkanalhöhe 113 in einem Bereich von mindestens 0,05 m und maximal 0,5 m.

Es ist darauf zu achten, dass der Frachtbehälter zusammen mit der Heckluftlenkeinrichtung 100 bzw. das Kraftfahrzeug zusammen mit der Heckluftlenkeinrichtung 100 die gesetzlich zulässigen Abmessungen einhalten. So darf beispielsweise in Deutschland ein Nutzfahrzeug eine Höhe von 4 m, eine Breite von 1,55 m bzw. 2,60 m und eine Länge von 16,50 m bzw. 18,75 m nicht überschreiten.

Der Luftkanal wird durch eine Luftkanalwand zwischen der Lufteinlassöffnung 120 und der Luftauslassöffnung 130 räumlich begrenzt. In den vorliegend dargestellten Ausführungsformen weist der Luftkanal einen rechteckförmigen Querschnitt auf. Entsprechend setzt sich die Luftkanalwand aus zwei Luftkanalseitenwänden, einer Luftkanaloberwand und einer Luftkanalunterwand zusammen. In dem vorliegenden Beispiel erstrecken sich die beiden Luftkanalseitenwände im Wesentlichen parallel zueinander. Prinzipiell ist es aber auch denkbar, dass die beiden Luftkanalseitenwände zueinander geneigt angeordnet sind, so dass sich ein trapezförmiger Querschnitt ergibt. Ferner ist in den bevorzugten Ausführungsformen der Heckluftlenkeinrichtung 100 vorgesehen, dass die Luftkanaloberwand oberhalb der Luftkanalunterwand angeordnet ist, wobei die Luftkanaloberwand und die Luftkanalunterwand abschnittsweise parallel verlaufen können und/oder sich abschnittsweise geneigt zueinander erstrecken, so dass die Querschnittsfläche des Querschnitts des Luftkanals zwischen der Lufteinlassöffnung 120 und der Luftauslassöffnung 130 variiert.

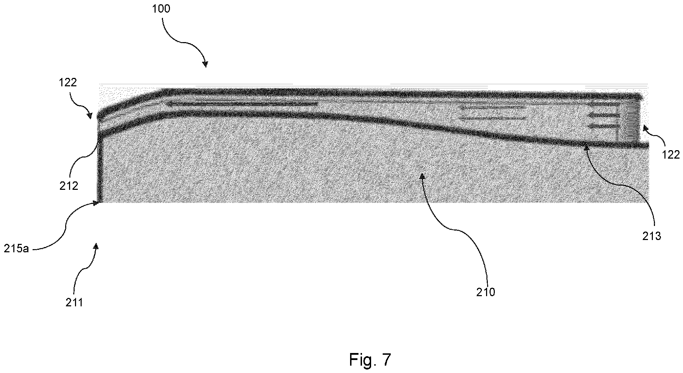

Es ist zu verstehen, dass die Luftkanalunterwand abschnittsweise oder vollständig durch die Deckenwand 213 des Frachtbehälters ausgebildet sein kann. Dies ist in Figur 7 schematisch dargestellt.

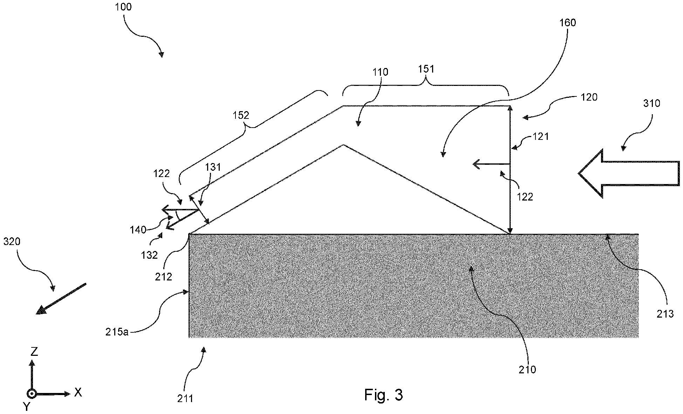

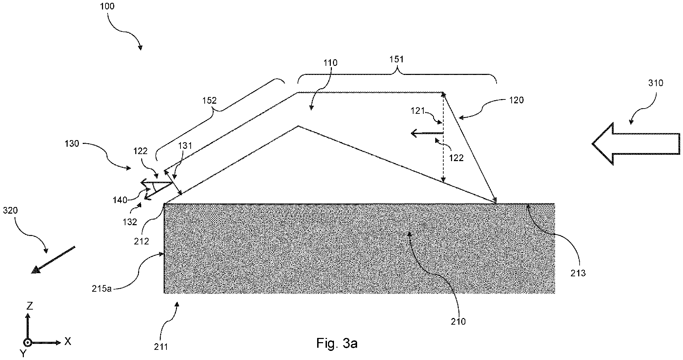

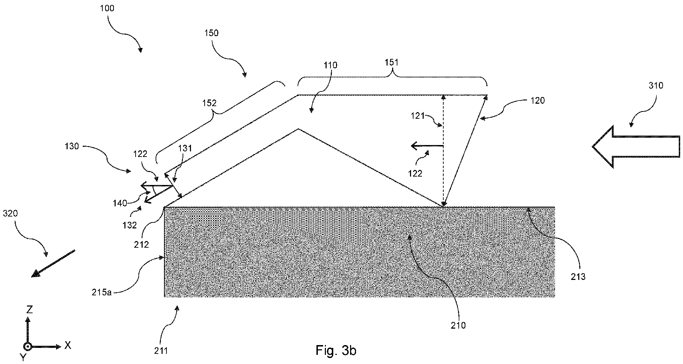

Entsprechend weist Lufteinlassöffnung 120 der vorliegenden Ausführungsformen der Heckluftlenkeinrichtung 100 eine erste Querschnittsfläche 121 und die Luftauslassöffnung 130 eine zweite Querschnittsfläche 131 auf, wobei die zweite Querschnittsfläche 131 kleiner ist als die erste Querschnittsfläche 121. Um nun die gewünschte aerodynamische Effizienzsteigerung prinzipiell erzielen zu können, ist eine Flächennormale 132 der zweiten Querschnittsfläche 131 gegenüber einer Flächennormale 122 der ersten Querschnittsfläche 121 um einen Neigungswinkel 140 geneigt, so dass die im Vorwärtsbetriebszustand des Kraftfahrzeugs 200 durch den Luftkanal 110 strömende Luft 320 an dem zweiten Querschnitt 131 an der Luftauslassöffnung 130 des Luftkanals 110 in Richtung der Windschattenzone 220 des Frachtbehälters 210 abgelenkt wird. Dies ist anhand der Figuren 3 bis 4 illustriert.

Um nun die gewünschte aerodynamische Effizienzsteigerung tatsächlich erzielen zu können, ist die Heckluftlenkeinrichtung 100 dabei so an der Heckkante 212 oder im Bereich der Heckkante des Frachtbehälters anzuordnen, dass die Luftauslassöffnung 130 des Luftkanals 110 an der Heckkante 212 oder im Bereich der Heckkante 212 mündet. Die Heckluftlenkeinrichtung 100 ist vorliegend in solcher Weise an der Heckkante 212 oder im Bereich der Heckkante des Frachtbehälters angeordnet, dass die Luftauslassöffnung 130 des Luftkanals 110 im Vorwärtsbetriebszustands des Kraftfahrzeuges 200 stromabwärts der Heckkante 212 mündet. Durch diese Anordnung der Heckluftlenkeinrichtung 100 ist der Luftkanal 110 ausgebildet, im Vorwärtsbetriebszustand des Kraftfahrzeugs 200 die anströmende Luft 310 durch den Luftkanal 110 von der Lufteinlassöffnung 120 zu der Luftauslassöffnung 130 in Richtung der Windschattenzone 220 des Frachtbehälters 210 zu lenken.

Wie zuvor bereits erläutert, weist der Luftkanal 110 in den vorliegend dargestellten Ausführungsformen eine polygonale, hier rechteckförmige Querschnittsfläche 114 auf. Prinzipiell sind auch davon abweichende Querschnittsflächen denkbar. Die Querschnittsfläche 114 erstreckt sich dabei orthogonal zur Längsrichtung des Luftkanals 110. Die Geometrie der Querschnittsfläche 114 des Luftkanals kann über die Luftkanallänge variieren. In einer Ausführungsform kann die Lufteinlassöffnung 120 eine andere Geometrie als die Luftauslassöffnung 130 haben. Die Querschnittsfläche 114 des Luftkanals kann eine Verjüngung zwischen der Lufteinlassöffnung 120 und der Luftauslassöffnung 130 aufweisen, wie dies in den dargestellten Ausführungsformen der Fall ist. Vorzugsweise liegt die Verjüngung des Querschnittes in einem Bereich von mindestens 5% und maximal 95%. Die Querschnittsfläche 114 des Luftkanals kann über die Länge des Luftkanals in Größe und/oder Geometrie variieren. Ein oder mehrere Abschnitte des Luftkanals 110 können dabei unterschiedliche Querschnittsflächen aufweisen. Insbesondere können ein oder mehrere Abschnitte des Luftkanals 110 auch konstante Querschnitte aufweisen. Ein Abschnitt mit konstanter Querschnittsfläche kann direkt an die Lufteinlassöffnung 120 anschließen (siehe beispielsweise Figur 2). Ein Abschnitt mit konstanter Querschnittsfläche kann das Ende des Luftkanals 110 bilden, wie dies die in den Figuren 1-4 gezeigten Ausführungsformen hervorgeht. Ein Abschnitt mit konstanter Querschnittsfläche kann sich auch zwischen zwei Abschnitten mit sich verändernder Querschnittsfläche befinden (nicht dargestellt). Der Luftkanal 110 kann dabei auch Abschnitte umfassen, deren Querschnittsfläche größer ist als die Fläche der Lufteinlassöffnung 120.

Wie in Figuren 3 bis 4 dargestellt ist, weist der Luftkanal 110 eine erste Querschnittsfläche 121 mit einer ersten Flächennormalen 122 und eine zweite Querschnittsfläche 131 mit einer zweiten Flächennormalen 132 auf. Die Flächennormalen 122, 132 sind dabei so um einen Neigungswinkel 140 geneigt, dass die im Vorwärtsbetriebszustand des Kraftfahrzeugs 200 durch den Luftkanal 110 ausströmende Luft 320 durch die zweite Querschnittsfläche 131 des Luftkanals 110 in Richtung der Windschattenzone 220 des Frachtbehälters 210 abgelenkt wird. Die erste Querschnittsfläche 121 ist dabei der Schnitt orthogonal zur Längsrichtung des Luftkanals 110. In einer Ausführungsform verläuft die Längsrichtung des Luftkanals 110 parallel zur anströmenden Luft 310. Die Querschnittsfläche 121 erstreckt sich in dieser Ausführungsform orthogonal zur anströmenden Luft 310. Die erste Flächennormale 122 verläuft daher in Richtung der anströmenden Luft 310. In Ausführungsformen, in denen der Frachtbehälter 210 eine Deckenwand 213 und eine gegenüberliegend zu der Deckenwand 213 angeordnete Bodenwand 214 sowie zwei gegenüberliegend zueinander angeordnete Seitenwände 215a, 215b, die die Bodenwand 214 mit der Deckenwand 213 verbinden umfasst, erstreckt sich die erste Flächennormale 122 im Wesentlichen parallel zur Deckenwand 213. In Ausführungsformen, in denen der Frachtbehälter 210 im Wesentlichen die Form eines Quaders hat, erstreckt sich sie erste Flächennormale 122 im Wesentlichen orthogonal zur Flächennormale der Deckenwand 213 des Frachtbehälters 210. In einer Ausführungsform ist die erste Querschnittsfläche 121 mit der Lufteinlassöffnung 120 identisch; sie kann aber auch in jedem anderen Bereich des Luftkanals 110, durch den die anströmende Luft 310 einströmt, verortet werden. Zwei solcher Fälle sind aus den Ausführungsformen, die in den Figuren 3a und 3b dargestellt werden, ersichtlich.

Figur 3a zeigt eine Ausführungsform der Heckluftlenkeinrichtung 100 in der die Lufteinlassöffnung 120 nicht der ersten Querschnittsfläche 121 entspricht. In der in Figur 3a dargestellten Ausführungsform ist die Lufteinlassöffnung 120 gegenüber der Deckenwand 213 des Frachtbehälters 210 so geneigt, dass der Punkt der Lufteinlassöffnung 120, der der Deckenwand 213 am nächsten ist, weiter vom Heck 212 des Frachtbehälters entfernt ist, als der Punkt der Lufteinlassöffnung 120, der der Deckenwand 213 am fernsten ist. Die erste Querschnittsfläche 121 erstreckt sich dabei, wie auch in der Ausführungsform in Figur 3 dargestellt, orthogonal zur Längsrichtung des Luftkanals 110.

Figur 3b zeigt eine weitere Ausführungsform der Heckluftlenkeinrichtung 100 in der die Lufteinlassöffnung 120 nicht der ersten Querschnittsfläche 121 entspricht. In der in Figur 3b dargestellten Ausführungsform ist die Lufteinlassöffnung 120 gegenüber der Deckenwand 213 des Frachtbehälters 210 so geneigt, dass der Punkt der Lufteinlassöffnung 120, der der Deckenwand 213 am fernsten ist, weiter vom Heck 212 des Frachtbehälters entfernt ist, als der Punkt der Lufteinlassöffnung 120, der der Deckenwand 213 am nächsten ist. Die erste Querschnittsfläche 121 erstreckt sich dabei, wie auch in der Ausführungsform in Figur 3 dargestellt, orthogonal zur Längsrichtung des Luftkanals 110.

Die zweite Querschnittsfläche 131 ist ein Querschnitt des Luftkanals 110 im Bereich der Luftauslassöffnung 130. Der Bereich des Luftkanals 110 der sich von der Luftauslassöffnung 130 aus erstreckt, verläuft dabei nicht parallel zum Bereich des Luftkanals, der sich ausgehend von der Lufteinlassöffnung 120 erstreckt. Die zweite Querschnittsfläche 132 ist ein Querschnitt orthogonal zur Richtung des Luftkanals 110, der sich von der Luftauslassöffnung 130 aus erstreckt. Die zweite Flächennormale verläuft daher in Richtung der ausströmenden Luft 320. In einer Ausführungsform ist die zweite Querschnittsfläche 132 mit der Luftaustrittsöffnung 130 identisch; sie kann aber auch in jedem anderen Bereich, durch den die ausströmende Luft 320 durch den Luftkanal strömt, verortet sein. Die Fläche der ersten Querschnittsfläche 121 ist größer als die Fläche der zweiten Querschnittsfläche 131.

Zur Veranschaulichung ist in den Figuren 3-4 die erste Flächennormale 122 nicht nur bei der ersten Querschnittsfläche 121, sondern auch gemeinsam mit der zweiten Flächennormale 132 bei der zweiten Querschnittsfläche 131 eingezeichnet. In den Figuren 3-4 sind die beiden Flächennormalen 122, 132 dabei in Richtung der anströmenden Luft 310 zeigend gewählt. Die Flächennormalen 122, 132 können aber auch in entgegengesetzter Richtung zeigend gewählt werden, ohne dass sich Unterschiede ergeben. Die Vektoren sind dabei jedoch stets in gleiche Richtung zeigend zu wählen. Wie in den Figuren 2-4 dargestellt, sind die erste und die zweite Querschnittsfläche 121, 132 so positioniert, dass die erste und die zweite Flächennormale 122, 132 einen Neigungswinkel 140 einschließen. In bevorzugten Ausführungsformen liegt der Neigungswinkel 140 zwischen den Flächennormalen 122, 132 in einem Bereich von mindestens 10°, bevorzugt mindestens 15°, insbesondere bevorzugt mindestens 20°, und/oder maximal 30°, bevorzugt maximal 55°, insbesondere bevorzugt maximal 80°.

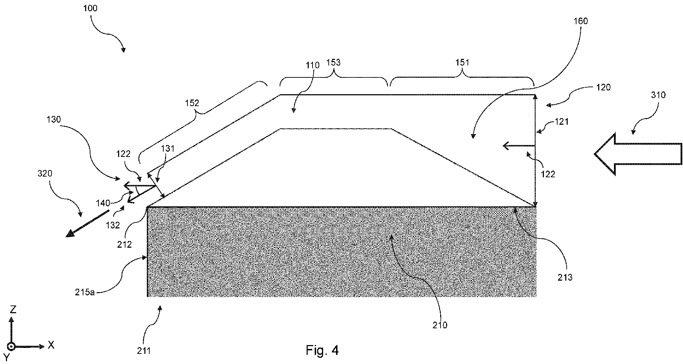

In den in Figuren 3 und 4 gezeigten Ausführungsformen ist der Luftkanal 110 als Düse 160 ausgebildet. Die Lufteinlassöffnung 120 des Luftkanals ist dabei die Lufteinlassöffnung der Düse 160. Die Eintrittsöffnung der Düse 160 kann polygonal, insbesondere rechteckig oder quadratisch, kreisförmig, oval, oder teilringförmig sein oder eine andere geeignete Form haben. Die Form der Eintrittsöffnung kann dem Querschnitt der Düse orthogonal zu ihrer Längsrichtung, die der Längsrichtung des Luftkanals 110 entspricht, entsprechen. Die Geometrie der Querschnittsfläche der Düse 160 entlang ihrer Längsrichtung kann variieren. Die Düse 160 kann sich stetig in Richtung der Luftauslassöffnung 130 verjüngen, wobei die Lufteinlassöffnung 120 die größte Fläche aufweist. In einer bevorzugten Ausführungsform liegt die Verjüngung der Düse 160 in einem Bereich von mindestens 5% und maximal 95%. Die Düse 160 kann auch als sich unregelmäßig verjüngende Düse ausgestaltet sein. Insbesondere kann die Düse 160 auch einen oder mehrere Abschnitte enthalten, die eine konstante Querschnittsfläche aufweisen. Ein Abschnitt mit konstanter Querschnittsfläche kann direkt an die Lufteinlassöffnung 120 anschließen. Ein Abschnitt mit konstanter Querschnittsfläche kann das Ende der Düse 160 bilden. Ein Abschnitt mit konstanter Querschnittsfläche kann sich auch zwischen zwei Abschnitten mit sich verändernder Querschnittsfläche befinden. Der Luftkanal 110 kann dabei auch Abschnitte umfassen, deren Querschnittsfläche größer als die Fläche der Lufteinlassöffnung 120 ist.

Wie in Figuren 3 bis 4 dargestellt, wird der Luftkanal 110 der Heckluftlenkeinrichtung 100 in mehrere Abschnitte 151, 152, 153 unterteilt. Der Luftkanal 110 umfasst dabei zumindest einen Lufteinlass-Kanalabschnitt 151. Der Lufteinlass-Kanalabschnitt 151 erstreckt sich ausgehend von der Lufteinlassöffnung 120 in einer Längsrichtung in Richtung der Luftauslassöffnung 130. In einer Ausführungsform verjüngt sich die Querschnittsfläche des Lufteinlass-Kanalabschnittes 151 in Richtung der Luftauslassöffnung 130. In einer Ausführungsform ist der Lufteinlass-Kanalabschnitt 151 als Düse 160 wie vorstehend beschrieben ausgebildet. Der Lufteinlass-Kanalabschnitt 151 umfasst die erste Querschnittsfläche 121. Die erste Querschnittsfläche 121 ist dabei der Schnitt orthogonal zur Längsrichtung des Lufteinlass-Kanalabschnittes 151. Der Lufteinlass-Kanalabschnitt 151 umfasst eine Eintrittsöffnung und eine Austrittsöffnung. In einer Ausführungsform entspricht die Eintrittsöffnung des Lufteinlass-Kanalabschnittes 151 der Lufteinlassöffnung 120 des Luftkanals 110. In einer Ausführungsform entspricht die Eintrittsöffnung des Lufteinlass-Kanalabschnittes 151 der ersten Querschnittsfläche 121 und der Lufteinlassöffnung 120 des Luftkanals 110. In einer Ausführungsform verläuft die Längsrichtung des Lufteinlass-Kanalabschnittes parallel zur Längsrichtung des Luftkanals 110. In einer Ausführungsform verläuft die Längsrichtung des Lufteinlass-Kanalabschnittes 151 parallel zur anströmenden Luft 310. Die Querschnittsfläche 121 erstreckt sich in dieser Ausführungsform orthogonal zur anströmenden Luft 310. Die erste Flächennormale 122 verläuft daher in Richtung der anströmenden Luft 310. Die erste Flächennormale 122 verläuft in Ausführungsformen in denen der Frachtbehälter 210 die Form eines Quaders hat orthogonal zur Flächennormale der Deckenwand 213 des Frachtbehälters 210. In einer Ausführungsform kann der Lufteinlass-Kanalabschnitt 151 gekrümmt sein. In dieser Ausführungsform erstreckt sich die erste Querschnittsfläche 121 als Querschnitt orthogonal zur anströmenden Luft 310. Wenn der Frachtbehälter 210 in dieser Ausführungsform eine Deckenwand 213 und eine gegenüberliegend zu der Deckenwand 213

angeordnete Bodenwand 214 sowie zwei gegenüberliegend zueinander angeordnete Seitenwände 215a, 215b, die die Bodenwand 214 mit der Deckenwand 213 verbinden umfasst, erstreckt sich die erste Flächennormale 122 im Wesentlichen parallel zur Deckenwand 213.

Die Heckluftlenkeinrichtung 100 kann weiterhin einen Luftauslass-Kanalabschnitt 152 umfassen, der sich der sich ausgehend von der Luftauslassöffnung 130 in eine Längsrichtung in Richtung der Lufteinlassöffnung 120 erstreckt und die zweite Querschnittsfläche 131 umfasst. Dabei verläuft der Luftauslass-Kanalabschnitt 152 nicht parallel zum Lufteinlass-Kanalabschnitt 151. Die zweite Querschnittsfläche 131 ist dabei der Schnitt orthogonal zur Längsrichtung des Luftauslass-Kanalabschnitts 152. Der Luftauslass-Kanalabschnitt 152 umfasst eine Eintrittsöffnung und eine Austrittsöffnung. In einer Ausführungsform entspricht die Austrittsöffnung des Luftauslass-Kanalabschnitts 152 der Luftauslassöffnung 130. In einer Ausführungsform entspricht die Austrittsöffnung des einen Luftauslass-Kanalabschnittes 152 der zweiten Querschnittsfläche 131 und der Luftauslassöffnung 130. In einer Ausführungsform ist die Querschnittsfläche des Luftauslass-Kanalabschnittes 152 orthogonal zu seiner Längsrichtung konstant. In einer Ausführungsform verjüngt sich Querschnittsfläche des Luftauslass-Kanalabschnittes 152 orthogonal zu seiner Längsrichtung stetig. In diesen Ausführungsformen kann sich der Luftauslass-Kanalabschnitt 152 sowohl in Richtung der Lufteinlassöffnung 120 als auch in Richtung der Luftauslassöffnung 130 verjüngen. In einer Ausführungsform umfasst der Luftauslass-Kanalabschnitt 152 mehrere Abschnitte, die konstante und/oder sich verjüngende Querschnitte aufweisen. In einer Ausführungsform kann der Lufteinlass-Kanalabschnitt 151 gekrümmt sein. In dieser Ausführungsform entspricht die zweite Querschnittsfläche 131 im Wesentlichen der Fläche der Luftauslassöffnung 130.

Die Längsrichtung des Luftauslass-Kanalschnitts 152 verläuft, wie dies in den Figuren 3 bis 4 dargestellt ist, parallel zur ausströmenden Luft 320. Die Querschnittsfläche 131 erstreckt sich in diesen Ausführungsformen orthogonal zur ausströmenden Luft 320. Die zweite Flächennormale 132 verläuft daher in Richtung der ausströmenden Luft 320. Die zweite Flächennormale 132 ist dabei so geneigt, dass sie in Richtung der Windschattenzone 220 zeigt, die sich in einem Vorwärtsbetriebszustand des Kraftfahrzeuges 200 hinter der Seitenwand 215a des Frachtbehälters 210 bildet.

Wie dies in den Figuren 3, 3a, 3b dargestellt ist, kann die Austrittsöffnung des Lufteinlass-Kanalschnitts 151 der Eintrittsöffnung des Luftauslass-Kanalabschnitts 152 entsprechen. In dieser Ausführungsform der Heckluftlenkeinrichtung 100 umfasst der Luftkanal 110 daher zwei Abschnitte.

Darüber hinaus kann der Luftkanal 110 einen weiteren Abschnitt umfassen, der sich als Mittelkanalabschnitt 153 zwischen dem Lufteinlass-Kanalabschnitt 151 und dem Luftauslass-Kanalabschnitt 152 erstreckt.

Diese Ausführungsform ist in Figur 4 dargestellt. In dieser Ausführungsform der Heckluftlenkeinrichtung 100 umfasst der Luftkanal 110 daher drei Abschnitte. In einer Ausführungsform verjüngt sich der Querschnitt des Lufteinlass-Kanalabschnitts 151 ausgehend von der Lufteinlassöffnung 120 derart, dass der Querschnitt der Austrittsöffnung des Lufteinlass-Kanalabschnitts 151 dem Querschnitt des Mittelkanalabschnitts 153 entspricht. In einer Ausführungsform entspricht der Querschnitt des Mittelkanalabschnittes 153 dem Querschnitt der Eintrittsöffnung des Luftauslass-Kanalabschnitts 152. In einer Ausführungsform ist der Querschnitt des Mittelkanalabschnittes konstant. In dieser Ausführungsform haben die Austrittsfläche des Lufteinlass-Kanalabschnitts 151 und die Lufteintrittsfläche des Luftauslass-Kanalabschnitts 152 dieselbe Querschnittsfläche. Der Luftkanal 110 kann auch noch weitere Abschnitte 150 umfassen, die sich mit einer bestimmten Länge zwischen dem Lufteinlass-Kanalabschnitt 151 und dem Mittelkanalabschnitt 153 oder dem Mittelkanalabschnitt 153 und dem Luftauslass-Kanalabschnitt 152 erstrecken können. In Ausführungsformen, in denen der Lufteinlass-Kanalabschnitt 151 und/oder der Luftauslass-Kanalabschnitt 152 gekrümmt sind, ist der Mittelkanalabschnitt 153 gerade. Die Ausgestaltung des Lufteinlass-Kanalabschnitts 151 und des Luftauslass-Kanalabschnitts 152 sind von der Ausgestaltung des Mittelkanalabschnitts 153 und/oder weiterer Kanalabschnitte 150 unberührt. Das heißt, dass zum Beispiel Lufteinlass-Kanalabschnitte 151 wie in den Figuren 3a, 3b dargestellt anstelle des Lufteinlass-Kanalabschnitts 151 wie in Figur 4 dargestellt verwendet werden können.

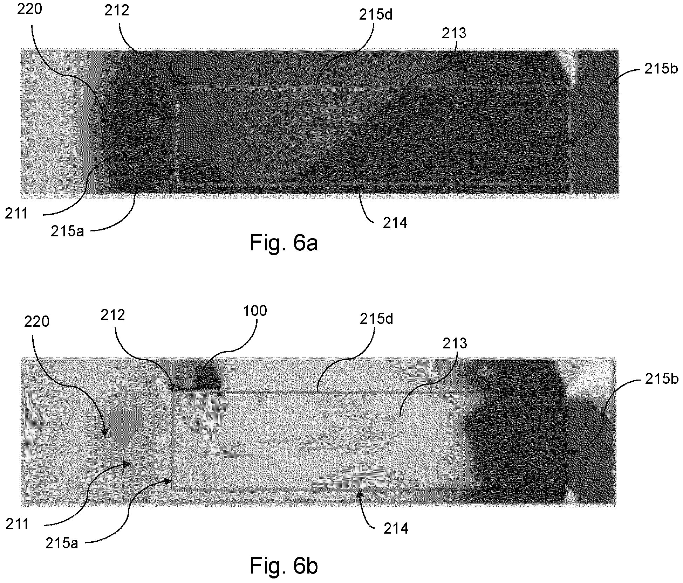

Die exemplarischen Strömungsbilder einer Strömungssimulation in den Figuren 5a,b und die exemplarischen Darstellungen des Drucks der Strömungssimulation bis in den Figuren 6a,b veranschaulichen den Effekt der Heckluftlenkeinrichtung 100. Die exemplarischen Darstellungen der Strömungssimulation in den Figuren 5a und 6a zeigen die Strömungs- und Drucksituation am Frachtbehälter ohne die Heckluftlenkeinrichtung 100. Die exemplarischen Darstellungen der Strömungssimulation in den Figuren 5b und 6b zeigt die Strömungs- und Drucksituation am Frachtbehälter mit der Heckluftlenkeinrichtung 100. Hierbei geht aus den Simulationsbildern hervor, dass sich der Bereich des Windschattens hinter dem Frachtbehälter aufgrund des in den Bereich hinter den Frachtbehälter abgelenkten Luftstroms der den Frachtbehälter anströmenden Luft verkleinert. Hierdurch wird die Sogwirkung reduziert und somit die aerodynamische Effizienz des Frachtbehälters bzw. des Kraftfahrzeugs verbessert.

BEZUGSZEICHENLISTE

| 100 | Heckluftlenkeinrichtung |
| 110 | Luftkanal |
| 111 | Luftkanallänge |
| 112 | Luftkanalbreite |
| 113 | Luftkanalhöhe |
| 114 | Kanalquerschnitt |
| 120 | Lufteinlassöffnung |
| 121 | erste Querschnittsfläche |
| 122 | Flächennormale der ersten Querschnittsfläche |
| 130 | Luftauslassöffnung |
| 131 | zweite Querschnittsfläche |
| 132 | Flächennormale der zweiten Querschnittsfläche |
| 140 | Neigungswinkel |
| 150 | Luftkanalabschnitt |
| 151 | Lufteinlass-Kanalabschnitt |
| 152 | Luftauslass-Kanalabschnitt |
| 153 | Mittelkanalabschnitt |
| 160 | Düse |
| 200 | Kraftfahrzeug |
| 210 | Frachtbehälter |
| 211 | Heck |
| 212 | Heckkante |
| 213 | Deckenwand |
| 214 | Bodenwand |
| 215a,b | Seitenwände |
| 216 | Frachtbehälterlänge |
| 217 | Frachtbehälterbreite |
| 220 | Windschattenzone |
| 230 | Sattelzugmaschine |
| 310 | anströmende Luft |
| 320 | ausströmende Luft |
| V | Vorwärtsfahrt im Vorwärtsbetriebszustand |

**Patentansprüche**

1. Heckluftlenkeinrichtung (100) für einen Frachtbehälter (210) eines Kraftfahrzeuges (200) zum Ablenken von in einem Vorwärtsbetriebszustand des Kraftfahrzeugs (200) anströmender Luft (310) in eine Windschattenzone (220) des Frachtbehälters (210), die Heckluftlenkeinrichtung (100) umfassend:

- einen Luftkanal (110),

∘ der sich in einer Längsrichtung zwischen einer Lufteinlassöffnung (120) und einer Luftauslassöffnung (130) mit einer Luftkanallänge (111) erstreckt,
∘ der sich in einer Querrichtung orthogonal zur Längsrichtung mit einer Luftkanalbreite (112) erstreckt, und
∘ der sich orthogonal zur Längsrichtung und orthogonal zur Querrichtung mit einer Luftkanalhöhe (113) erstreckt, wobei

- der Luftkanal (110) ausgebildet ist, im Vorwärtsbetriebszustand des Kraftfahrzeugs (200) die anströmende Luft (310) durch den Luftkanal (110) von der Lufteinlassöffnung (120) zu der Luftauslassöffnung (130) in Richtung der Windschattenzone (220) des Frachtbehälters (210) zu lenken, wobei

- die Lufteinlassöffnung (120) eine erste Querschnittsfläche (121) aufweist und die Luftauslassöffnung (130) eine zweite Querschnittsfläche (131) aufweist, wobei die zweite Querschnittsfläche (131) kleiner ist als die erste Querschnittsfläche (121),

**dadurch gekennzeichnet, dass**

- eine Flächennormale (132) der zweiten Querschnittsfläche (131) gegenüber einer Flächennormale (122) der ersten Querschnittsfläche (121) um einen Neigungswinkel (140) geneigt ist, so dass die im Vorwärtsbetriebszustand des Kraftfahrzeugs (200) durch den Luftkanal (110) strömende Luft (310) an der zweiten Querschnittsfläche (131) an der Luftauslassöffnung (130) des Luftkanals (110) in Richtung der Windschattenzone (220) des Frachtbehälters (210) abgelenkt wird.

2. Heckluftlenkeinrichtung (100) nach dem vorhergehenden Anspruch, wobei die erste Flächennormale (122) parallel zur anströmenden Luft (310) verläuft und der Neigungswinkel (140) zwischen den beiden Flächennormalen (122, 132) in einem Bereich von

- mindestens 10°, bevorzugt mindestens 15°, insbesondere bevorzugt mindestens 20° liegt, und/oder
- maximal 30°, bevorzugt maximal 55°, insbesondere bevorzugt maximal 80° liegt.

3. Heckluftlenkeinrichtung (100) nach einem der vorhergehenden Ansprüche 1 oder 2, wobei der Luftkanal (110) einen Kanalquerschnitt (114) aufweist, der zwischen der Lufteinlassöffnung (120) und der Luftauslassöffnung (130) eine Verjüngung aufweist, die in einem Bereich von

- mindestens 5% liegt; und/oder
- maximal 95 % liegt.

4. Heckluftlenkeinrichtung (100) nach einem der vorhergehenden Ansprüche 1 bis 3, wobei der Luftkanal (110) als Düse (160) ausgebildet ist oder einen Luftkanalabschnitt (150) aufweist, der als Düse (160) ausgebildet ist, wobei sich ein Querschnitt des Luftkanals (114) oder des Luftkanalabschnitts (150) in Richtung der Luftauslassöffnung (130) verjüngt.

5. Heckluftlenkeinrichtung (100) nach einem der vorhergehenden Ansprüche 1 bis 4, wobei der Luftkanal (110) einen oder mehrere der folgenden Luftkanalabschnitte (150) aufweist:

- einen Lufteinlass-Kanalabschnitt (151), der sich ausgehend von der Lufteinlassöffnung (120) in Richtung der Luftauslassöffnung (130) erstreckt, wobei der Lufteinlass-Kanalabschnitt (151) vorzugsweise als Düse (160) ausgebildet ist, deren Eintrittsöffnung der Lufteinlassöffnung (120) entspricht; und/oder
- einen Luftauslass-Kanalabschnitt (152), der sich ausgehend von der Luftauslassöffnung (130) in Richtung der Lufteinlassöffnung (120) erstreckt, wobei die Austrittsöffnung des Luftauslass-Kanalabschnitts (152) der Luftauslassöffnung (130) entspricht; und/oder
- einen Mittelkanalabschnitt (153), der zwischen der Lufteinlassöffnung (120) und der Luftauslassöffnung (130), insbesondere dem Lufteinlass-Kanalabschnitt (151) und dem Luftauslass-Kanalabschnitt (152) angeordnet ist, wobei der Mittelkanalabschnitt (153) vorzugsweise einen konstanten Querschnitt aufweist.

6. Heckluftlenkeinrichtung (100) nach dem vorhergehenden Anspruch 5, wobei

- der Lufteinlass-Kanalabschnitt (151) einen Querschnitt aufweist, der sich in Richtung der Luftauslassöffnung (130) verjüngt, und/oder
- der Luftauslass-Kanalabschnitt (152) einen konstanten Querschnitt und/oder eine konstante Querschnittsfläche aufweist; und/oder
- der Mittelkanalabschnitt (153) einen konstanten Querschnitt und/oder eine konstante Querschnittsfläche aufweist.

7. Heckluftlenkeinrichtung (100) nach dem vorhergehenden Anspruch 6, wobei

- der Querschnitt des Luftauslass-Kanalabschnitts (152) dem Querschnitt des Mittelkanalabschnitts (153) entspricht; und/oder
- die Querschnittsfläche des Luftauslass-Kanalabschnitts (151) der Querschnittsfläche des Mittelkanalabschnitts (153) entspricht; und/oder
- der Querschnitt des Lufteinlass-Kanalabschnitts (151) sich ausgehend von der Lufteinlassöffnung (120) derart verjüngt, dass der Querschnitt dem Querschnitt des Mittelkanalabschnitts (153) entspricht; und/oder
- die Querschnittsfläche des Lufteinlass-Kanalabschnitts (151) ausgehend von der Lufteinlassöffnung (120) derart abnimmt, dass die Querschnittsfläche der Querschnittsfläche des Mittelkanalabschnitts (153) entspricht.

8. Heckluftlenkeinrichtung (100) nach einem der vorhergehenden Ansprüche 5 bis 7, wobei

- der Luftkanal (110) im Lufteinlass-Kanalabschnitt (151) gekrümmt ist; und/oder
- der Luftkanal (110) im Luftauslass-Kanalabschnitt (152) gekrümmt ist; und/oder
- der Mittelkanalabschnitt (153) gerade ist.

9. Heckluftlenkeinrichtung (100) nach einem der vorhergehenden Ansprüche 1 bis 8, wobei der Luftkanal (110) einen polygonalen, insbesondere rechteckigen, Querschnitt oder einen teilringförmigen Querschnitt (114) aufweist.

10. Heckluftlenkeinrichtung (100) nach einem der vorhergehenden Ansprüche 1 bis 9, wobei

   - die Luftkanallänge (111) in einem Bereich von mindestens 0,05 m liegt und/oder maximal 18,75 m liegt; und/oder
   - die Luftkanalbreite (112) in einem Bereich von mindestens 0,05 m liegt und/oder maximal 2,6 m liegt; und/oder
   - die Luftkanalhöhe (113) in einem Bereich von mindestens 0,05 m liegt und/oder maximal 0,5 m liegt.

11. Frachtbehälter (210) für ein Kraftfahrzeug (200), aufweisend eine Heckluftlenkeinrichtung (100) nach einem der vorhergehenden Ansprüche 1 bis 10.

12. Frachtbehälter (210) nach dem vorhergehenden Anspruch 11, wobei der Frachtbehälter (210) ein Heck (211) aufweist, wobei die Heckluftlenkeinrichtung (100) an dem Heck (211) oder im Bereich des Hecks (211) angeordnet ist.

13. Frachtbehälter (210) nach dem vorhergehenden Anspruch 12, wobei der Frachtbehälter (210) am Heck (211) eine Heckkante (212) aufweist und die Heckluftlenkeinrichtung (100) derart an dem Heck (211) oder im Bereich des Hecks (211) angeordnet ist, dass die Luftauslassöffnung (130) im Vorwärtsbetriebszustand des Kraftfahrzeuges (200) an der Heckkante (212) mündet oder stromabwärts der Heckkante (212) mündet.

14. Frachtbehälter (210) nach einem der vorhergehenden Ansprüche 11 bis 13, aufweisend eine Deckenwand (213) und eine gegenüberliegend zu der Deckenwand (213) angeordnete Bodenwand (214) sowie zwei gegenüberliegend zueinander angeordnete Seitenwände (215a, 215b), die die Bodenwand (214) mit der Deckenwand (213) verbinden, wobei

   - sich die erste Flächennormale (122) im Wesentlichen parallel zu der Deckenwand (213) erstreckt; und/oder
   - sich die zweite Flächennormale (132) im Wesentlichen geneigt zu der Deckenwand (213) erstreckt.

15. Frachtbehälter (210) nach einem der vorhergehenden Ansprüche 11 bis 14, wobei sich der Frachtbehälter (210) in Längsrichtung mit einer Frachtbehälterlänge (216) erstreckt und in Querrichtung orthogonal zur Längsrichtung mit einer Frachtbehälterbreite (217) erstreckt, wobei

   - die Luftkanallänge (111) der Frachtbehälterlänge (216) entspricht oder kleiner ist als die Frachtbehälterlänge (216); und/oder
   - die Luftkanalbreite (112) der Frachtbehälterbreite (217) entspricht oder kleiner ist als die Frachtbehälterbreite (217).

16. Kraftfahrzeug (200) aufweisend eine Heckluftlenkeinrichtung (100) nach einem der vorhergehenden Ansprüche 1 bis 10 und/oder einen Frachtbehälter (210) nach einem der vorhergehenden Ansprüche 11 bis 15.

17. Kraftfahrzeug (200) nach dem vorhergehenden Anspruch, aufweisend eine Sattelzugmaschine (230), wobei der Frachtbehälter (210) im Vorwärtsbetriebszustand des Kraftfahrzeugs (200) hinter der Sattelzugmaschine (230) angeordnet ist.

18. Verwendung einer Heckluftlenkeinrichtung (100) nach einem der vorhergehenden Ansprüche 1 bis 10 für einen Frachtbehälter (210) und/oder für ein Kraftfahrzeug (200) mit einem Frachtbehälter (210).

19. Verwendung eines Frachtbehälters (210) nach einem der vorhergehenden Ansprüche 11 bis 15 für ein Kraftfahrzeug (200).

Fig. 1

Fig. 2

Fig. 3

Fig. 3a

Fig. 3b

Fig. 4

Fig. 5a

Fig. 5b

Fig. 6a

Fig. 6b

Fig. 7

Europäisches
Patentamt

European
Patent Office

Office européen
des brevets

## EUROPÄISCHER RECHERCHENBERICHT

Nummer der Anmeldung

EP 24 15 7183

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 542 737 A (MADDEN WILLIAM R [CA]) 6. August 1996 (1996-08-06) | 1-5,9-19 | INV. B62D35/00 |
| A | * Abbildungen 1-3 * | 6-8 | |
| | - - - - - | | |
| A | US 7 484 791 B1 (CHEN SHIH H [TW]) 3. Februar 2009 (2009-02-03) * Zusammenfassung; Abbildungen 1-3 * | 1-19 | |
| | - - - - - | | |

**RECHERCHIERTE SACHGEBIETE (IPC)**

B62D

Der vorliegende Recherchenbericht wurde für alle Patentansprüche erstellt

| Recherchenort | Abschlußdatum der Recherche | Prüfer |
|---|---|---|
| Den Haag | 8. August 2024 | Szaip, András |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 15 7183

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2024

| Im Recherchenbericht angeführtes Patentdokument | Datum der Veröffentlichung | Mitglied(er) der Patentfamilie | Datum der Veröffentlichung |
|---|---|---|---|
| US 5542737 A | 06-08-1996 | CA 2134900 A1 | 03-05-1996 |
| | | US 5542737 A | 06-08-1996 |
| US 7484791 B1 | 03-02-2009 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6932419 B1
- DE 102009027950 A1